Europäisches Patentamt

European Patent Office

Office européen des brevets

(11) Veröffentlichungsnummer: **0 476 319 A1**

## (12) EUROPÄISCHE PATENTANMELDUNG

(21) Anmeldenummer: **91113806.3**

(22) Anmeldetag: **17.08.91**

(51) Int. Cl.5: **A47J 37/07**

(30) Priorität: **22.08.90 DE 4026488**

(43) Veröffentlichungstag der Anmeldung:
**25.03.92 Patentblatt 92/13**

(84) Benannte Vertragsstaaten:
**AT BE CH DE DK ES FR GB GR IT LI LU NL SE**

(71) Anmelder: **SIA-HANDELSGESELLSCHAFT m.b.H.**
**Am Bahnhof**
**W-3320 Salzgitter-Thiede(DE)**

(72) Erfinder: **Irmler, Winfried**
**Badenbütteler Strasse 8**
**W-3175 Leiferde(DE)**

(74) Vertreter: **Einsel, Martin et al**
**Dr.R. Döring, Dr.J. Fricke, M.Einsel**
**Jasperallee 1a**
**W-3300 Braunschweig(DE)**

(54) **Grillgerät.**

(57) Das Grillgerät weist eine wannenförmige, in der Draufsicht quadratische oder rechteckige Feuerpfanne 1 und eine Einrichtung zur verschiebbaren Abstützung eines Grillrostes 13 sowie ein zusammenklappbares Traggestell zur Aufnahme der Feuerpfanne 1 auf. Das Traggestell besteht aus zwei U-förmigen Gestellteilen 2;3 etwa gleicher Umrißgestalt, von denen das eine sich mit den freien Schenkeln 2b und 2c und das andere mit dem Querschenkel 3a auf dem Untergrund abstützt. Die Gestellteile sind in Nähe ihrer nach oben weisenden Enden gelenkig miteinander verbunden. Die Feuerpfanne 1 ist zwischen den freien Schenkeln 2b und 2c sowie 3b und 3c an diesen so gehalten, daß sie in die Ebene des zusammengeklappten Traggestelles verschwenkbar ist.

Fig.1

Die Erfindung betrifft ein Grillgerät mit einer wannenförmigen, in der Draufsicht quadratischen oder rechteckigen Feuerpfanne und einer Einrichtung zur verschiebbaren Abstützung eines Grillrostes sowie einem zusammenklappbaren Traggestell zur Aufnahme der Feuerpfanne.

Es sind Grillgeräte vorgenannter Art bekannt, bei denen die Feuerpfanne auf einem Traggestell gehalten ist, welches Gestellteile ähnlich wie die eines Klapphockers aufweist. Die Feuerpfanne ist dabei in obere, bügelförmige Abschnitte der gelenkig miteinander verbundenen Gestellteile eingehängt und ruht somit bei der Benutzung auf den in der Spreizstellung befindlichen Gestellteilen.

Wenn das Grillgerät nicht gebraucht wird, kann es raumsparend untergebracht werden. Hierzu ist es notwendig die Feuerpfanne von dem Gestell abzunehmen, um das Gestell zusammenklappen zu können. Die Feuerpfanne muß dabei als vom Gestell getrenntes Teil aufbewahrt werden.

Beim Aufstellen des Grillgerätes ist umgekehrt zu verfahren, wobei es einer größeren Geschicklichkeit bedarf, das Gestell in die richtige Spreizstellung zu überführen, um die Feuerpfanne einhängen zu können.

Der Erfindung liegt die Aufgabe zugrunde, ein Grillgerät der eingangs genannten Art so auszubilden, daß bei sehr einfacher Handhabung eine schnelle und sichere Überführung aus der raumsparenden, zusammengeklappten Stellung in die Gebrauchsstellung und umgekehrt möglich ist, ohne daß irgendwelche Manipulationen mit der Feuerpfanne notwendig sind.

Zur Lösung vorstehender Aufgabe kennzeichnet sich das einleitend genannte Grillgerät dadurch, daß das Traggestell aus zwei U-förmigen Gestellteilen etwa gleicher Umrißgestalt besteht, von denen das eine sich mit den freien Schenkeln und das andere mit dem Querschenkel auf dem Untergrund abstützt, daß die Gestellteile in Nähe ihrer nach oben weisenden Enden gelenkig miteinander verbunden sind und die Feuerpfanne zwischen den beiden Schenkeln der Gestellteile an diesen so gehalten ist, daß sie in die Ebene des zusammengeklappten Traggestelles verschwenkbar ist.

Bei der neuen Ausbildung des Grillgerätes ruht die Feuerpfanne nicht auf den Gestellteilen als oberer Abschluß, sondern sie erstreckt sich zwischen die freien Schenkel der Gestellteile hindurch und ist an diesen Gestellteilen so befestigt, daß sie beim zusammengeklappten Traggestell in die Ebene dieses zusammengeklappten Gestells verschwenkt werden kann.

Zur Erzielung der Verschwenkbarkeit der Feuerpfanne ist es lediglich notwendig, daß diese mit einem der Gestellteile gelenkig verbunden ist, während an dem anderen Gestellteil Abstützeinrichtungen vorgesehen sein können, beispielsweise in Form von Bolzen oder Tragstäben, welche in der Gebrauchsstellung unter die Feuerpfanne oder in seitliche Wangenausnehmungen der Feuerpfanne verschiebbar sind und zum Zusammenklappen des Gerätes aus ihrer Abstützstellung in eine Freigabestellung überführt werden können.

Eine besonders günstige Ausführung ergibt sich, wenn die Feuerpfanne um eine parallel zu den Querschenkeln der Gestellteile verlaufende Achse schwenkbar an dem einen Gestellteil gehalten ist und mit ebenfalls parallel zu den Querschenkeln der Gestellteile fluchtend angeordneten seitlichen Führungsbolzen in längs der freien Schenkel des anderen Gestellteiles verlaufende Führungsschlitze eingreift. Durch diese Ausbildung wird automatisch beim Zusammenklappen des Gestells die Feuerpfanne in die Ebene des zusammengeklappten Traggestelles verschwenkt und umgekehrt beim Überführen des Traggestelles aus der zusammengeklappten Position in die Spreizststellung die Feuerpfanne in die horizontale Ebene verschwenkt. Dabei wird die Spreizstellung der Gestellteile automatisch durch die beschriebene Verbindung der Gestellteile mit der Feuerpfanne begrenzt.

Von weiterem Vorteil ist es, wenn das Gestellteil mit den nach oben weisenden freien Schenkeln unterhalb des Querschenkels des anderen Gestellteiles endet und mit diesem Gestellteil im Abstand von dessen Querschenkel gelenkig verbunden ist.

Die vorgenannte Ausführung hat den Vorteil, daß der Raum oberhalb der Feuerpfanne in der Gebrauchsstellung des Grillgerätes frei zugänglich ist und nicht durch die Gestellteile merkbar behindert wird.

Die nach oben weisenden freien Schenkel des einen Gestellteiles können über ihre gelenkigen Verbindungen mit dem anderen Gestellteil hinausragen und an ihrem freien Ende zur Aufnahme eines Grillspießes gabelförmig ausgebildet sein. Auf diese Weise bildet das mit den freien Schenkeln nach oben weisende Gestellteil gleichzeitig die Halterung für einen Grillspieß, so daß die sonst hierfür notwendigen Halteeinrichtungen entfallen können.

Zur Erhöhung der Standsicherheit des Grillgerätes in der Gebrauchsstellung, und um den Raum oberhalb der Feuerpfanne nicht durch die Gestellteile zu behindern, ist es zweckmäßig, wenn die Endabschnitte der nach oben weisenden freien Schenkel des einen Gestellteiles zur Bildung je einer Kreuzungsstelle mit den Schenkeln des anderen Gestellteiles aus der Ebene des U-förmigen Querschnittes abgewinkelt sind.

Eine konstruktiv einfache und damit besonders wirtschaftliche Lösung wird erreicht, wenn wenigstens eines der Gestellteile aus einem Rohr geformt ist, und das Gestellteil mit den nach oben weisenden freien Schenkeln aus einem im Querschnitt rechteckförmigen Flachmaterial besteht.

Um bei einem evtl. Ortswechsel des in der Gebrauchsstellung befindlichen Grillgerätes ein unbeabsichtigtes Zusammenklappen des Traggestelles zu vermeiden, ist es zweckmäßig, wenn die in den nach oben weisenden Schenkeln des einen Gestellteils vorgesehenen Führungsschlitze wenigstens eine Rastausnehmung für den Eingriff der Führungsbolzen aufweisen.

Bei einer weiteren bevorzugten Ausführungsform kann vorgesehen sein, daß der über die Anlenkstellen mit den nach oben weisenden Schenkeln hinausragende Abschnitt des Gestellteiles mit dem nach oben weisenden Mittelschenkel als abklappbarer Bügelteil ausgebildet ist, der mit seinen nach unten weisenden Schenkeln über eine arretierbare Schwenkeinrichtung mit den anderen freien Schenkeln gelenkig verbunden ist. Durch das genannte abklappbare Bügelteil wird nicht nur ein noch größerer Freiraum oberhalb der Feuerpfanne geschaffen, sondern auch gewährleistet, daß selbst bei starker Glutbildung eine Erhitzung des sich oberhalb der Feuerpfanne befindlichen Mittelschenkels des genannten Gestellteiles verhindert wird.

Die Ausbildung der Feuerpfanne erfolgt zweckmäßigerweise so, daß die den freien Schenkeln der Gestellteile zugekehrten Wangen der Feuerpfanne mit Führungs- und Abstützeinrichtungen für einen längs dieser Wangen einschiebbaren Grillrost aufweisen, und daß die der Einschubseite des Grillrostes gegenüberliegende Wange eine Anschlagfläche für den eingeschobenen Grillrost bildet oder aufweist.

Durch die Verschiebbarkeit des Grillrostes auf den Führungen kann einerseits die Feuerpfanne weitgehend freigelegt werden, um sie unbehindert mit Brenngut zu füllen. Dabei können die Führungseinrichtungen der Wangen für den einschiebbaren Grillrost aus randseitigen Abwinklungen der Wangen und unterhalb dieser Abwinklungen vorgesehenen, in das Wanneninnere vorspringenden Ausformungen oder Eindrückungen bestehen. Durch Anordnung von Ausformungen oder Eindrückungen in den Wandungen der Feuerpfanne in unterschiedlichen Abständen vom oberen Rand der Feuerpfanne können verschiedene Höhenlagen des Grillrostes in bezug auf das Feuerbett eingestellt werden.

Die Zeichnung gibt ein Ausführungsbeispiel der Erfindung wieder.

Fig. 1     zeigt in perspektivischer Darstellung ein Grillgerät nach der Erfindung in der Benutzungsstellung.

Fig. 2     gibt den Grill nach Fig. 1 in etwas vereinfachter Darstellung in der zusammengeklappten Position wieder.

Das in den Figuren wiedergegebene Grillgerät weist eine insgesamt mit 1 bezeichnete wannenförmige Feuerpfanne auf, die in der Draufsicht einen rechteckigen Querschnitt aufweist. In dem dargestellten Beispiel besteht die Feuerpfanne 1 aus Stahlblech. Dies hat den Vorteil, daß eine leichte Bauweise ermöglicht wird, und die Feuerpfanne im wesentlichen allein durch Abkantungen eines Zuschnittes und Verschweißen der aneinanderstoßenden Zuschnittränder hergestellt werden kann. Die Erfindung ist jedoch nicht auf Feuerpfannen aus Stahlblech beschränkt.

Das wiedergegebene Grillgerät weist fernerhin ein zusammenklappbares Traggestell auf, welches aus zwei U-förmigen Gestellteilen 2 und 3 besteht, welche etwa die gleiche Umrißgestalt aufweisen. Das Gestellteil 3 stützt sich mit seinem Querschenkel 3a auf dem Untergrund ab, während seine freien Schenkel 3b und 3c nach oben weisen. Das Gestellteil 2 ist umgekehrt angeordnet, so daß sein Querschenkel 2a nach oben weist, während es sich mit den freien Schenkein 2b und 2c auf dem Untergrund abstützt. Die beiden Gestellteile 2 und 3 sind in Nähe ihrer nach oben weisenden Enden gelenkig miteinander verbunden. Die Feuerpfanne 1 ist zwischen den freien Schenkein der beiden Gestellteile 2 und 3 an diesen so gehalten, daß sie in die Ebene des zusammengeklappten Traggestelles verschwenkbar ist.

Zur verschwenkbaren Verbindung der Gestellteile 2 und 3 dienen die freien Schenkel der Gestellteile verbindende Gelenkbolzen 4 und 5.

Die Feuerpfanne 1 ist über weitere Gelenkbolzen 6 und 7 an dem Gestellteil 2 schwenkbar gehalten, wobei die Schwenkbolzen 6 und 7 miteinander fluchten und somit Teile einer Schwenkachse bilden, die parallel zu den Querschenkeln 2a und 3a der Gestellteile 2 und 3 verläuft.

An der Feuerpfanne 1 sind seitlich gegenüberliegend und ebenfalls fluchtend, Führungsbolzen 8 vorgesehen, die in längs der freien Schenkel 3b und 3c des Gestellteiles 3 verlaufende Führungsschlitze 9 eingreifen.

Der Abstand der Gelenkbolzen 6 bzw. 7 von den Führungsbolzen 8 bestimmt die Spreizstellung der Gestellteile 2 und 3, welche diese Gestellteile einnehmen, wenn die Feuerpfanne 1 die horizontale Gebrauchsstellung einnimmt.

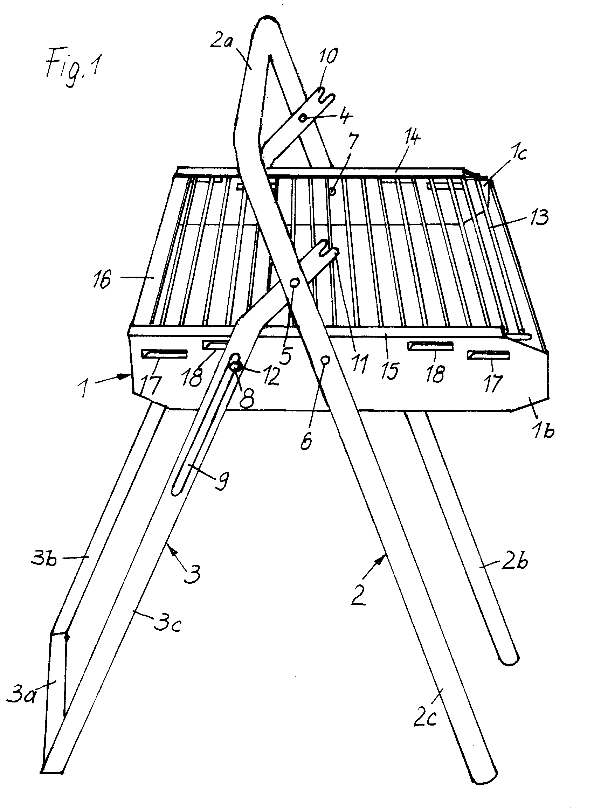

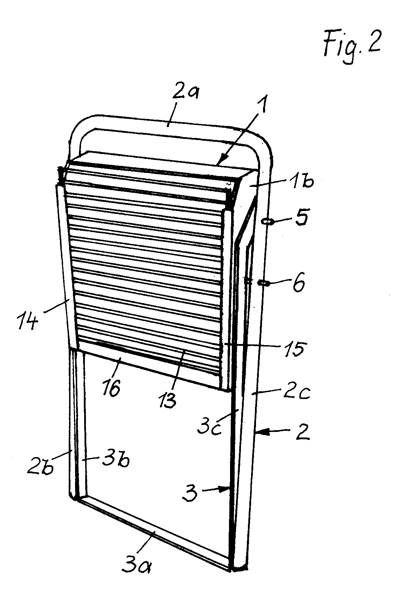

Zur Überführung des Grillgerätes von der in Fig.1 wiedergegebenen Gebrauchsstellung in die in Fig.2 dargestellte zusammengeklappte Stellung ist es lediglich notwendig, das Gestellteil 2 in die senkrechte Position zu überführen und gleichzeitig die Feuerpfanne 1 mit ihrem in Fig.1 rechten Teil nach oben zu verschwenken. Umgekehrt ist zur Überführung des Grillgerätes aus der zusammengeklappten Stellung in die Gebrauchsstellung lediglich die Feuerpfanne 1 umgekehrt in die horizontale Stellung zu verschwenken, wodurch gleichzeitig die Gestellteile 2 und 3 in die in Fig.1 wiedergegebene Spreizstellung überführt werden.

Das Grillgerät läßt sich somit ähnlich wie ein Gartenklappstuhl zusammenlegen und wieder in die Gebrauchsstellung überführen.

Damit die nach oben weisenden Enden der Gestellteile 2 und 3 nicht beim Zusammenklappen kollidieren, enden die freien Schenkel 3c und 3b des Gestellteiles 3 unterhalb des Querschenkels 2a des Gestellteiles 2, In geringem Abstand von den Enden sind die Schenkel 3b und 3c mit den freien Schenkeln 2b und 2c des anderen Gestellteiles 2 verbunden.

Die nach oben weisenden freien Schenkel 3b und 3c des Gestellteiles 3 sind an ihren über die Gelenkbolzen 4 und 5 hinausragenden Enden zur Aufnahme eines nicht dargestellten Grillspießes gabelförmig ausgebildet. Die gabelförmigen Abschnitte der Schenkel 3b und 3c sind in der Zeichnung mit 10 und 11 bezeichnet.

In dem Ausführungsbeispiel sind die nach oben weisenden freien Schenkel 3b und 3c des Gestellteiles 3 zur Bildung je einer Kreuzungsstelle mit den Schenkeln 2b und 2c des anderen Gestellteiles 2 aus der Ebene des U-förmigen Querschnittes abgewinkelt. Diese Abwinkelung ermöglicht eine Vergrößerung des Abstandes der Schwenkbolzen 6 von den Führungsbolzen 8 bei niedriger Bauweise des Grillgerätes, wodurch eine erhebliche Verbesserung der Standposition des Gerätes in der Gebrauchsstellung gewährleistet wird.

In dem dargestellten Beispiel ist das Gestellteil 2 als rohrförmiges Teil ausgebildet, während das Gestellteil 3 aus einem im Querschnitt rechteckförmigen Flachmaterial geformt ist. Diese Ausbildung ist für eine kompakte Bauweise besonders günstig. Die Führungsschlitze 9 lassen sich in dem Flachmaterial des Gestellteiles 3 wesentlich leichter einbringen als in einem rohrförmigen Gestellteil. Andererseits wirkt sich die Ausbildung des Gestellteiles 2 als Rohr günstig auf die Biegesteifigkeit des Traggestelles aus.

Um auch bei einem geringen Spreizwinkel zwischen den Gestellteilen 2 und 3 in der Gebrauchsstellung des Grillgerätes eine erhöhte Standsicherheit zu erhalten, kann es zweckmäßig sein, den Führungsschlitz 9 zusätzlich mit einer oder zwei Rastausnehmungen zu versehen, in welche die Führungsbolzen 8 eingreifen können. In dem dargestellten Beispiel greift der Führungsbolzen 8 in eine solche Rastausnehmung 12 in Nähe des oberen Endes des Führungsschlitzes 9 ein. Generell kann die Standsicherheit des erfindungsgemäßen Gerätes auch noch dadurch verbessert werden, daß die unteren Enden der freien Schenkel 2b,2c durch einen Querschenkel analog dem Schenkel 2a verbunden werden.

Das Gestellteil 2 kann oberhalb der Gelenkbolzen 4 und 5 auch als abklappbarer Bügel ausgebildet sein, welcher mit seinen nach unten weisenden Schenkeln über eine arretierbare Schwenkeinrichtung mit den anderen Abschnitten der freien Schenkel 2b und 2c verbunden ist. Diese Ausbildungsform ist jedoch in der Zeichnung nicht wiedergegeben. Durch die Ausbildung des Gestellteiles 2 mit einem abklappbaren Bügel wird die freie Zugänglichkeit zu der Feuerpfanne 1 bei der Benutzung des Grillgerätes erheblich verbessert. Es ist als Variante auch denkbar, den Querschenkel 2a mit seinen Schwenkteilen 2b und 2c oberhalb der Gelenkbolzen 4,5 z.B. im Zusammenhang mit einer Steckverbindung ganz herausnehmbar auszubilden.

Zur Aufnahme des Grillrostes 13 sind die seitlichen Wangen 1b und 1c der Feuerpfanne 1 mit Abstützeinrichtungen ausgerüstet, so daß der Grillrost 13 längs dieser Wangen verschiebbar ist und auch in der zusammengeklappten Stellung des Grillgerätes gem. Fig.2 nicht aus der Feuerpfanne herausgleiten kann. Zu diesem Zweck ist die der Einschubseite des Grillrostes 13 gegenüberliegende Wange als Anschlagfläche ausgebildet. Wie die Figuren zeigen, bestehen die Führungseinrichtungen der Wangen 1b und 1c aus randseitigen Abwinklungen 14 bzw. 15. Außerdem ist an der der Einschubseite des Grillrostes gegenüberliegenden Seite eine weitere Abwinklung 16 vorgesehen.

Schließlich sind in den seitlichen Wangen 1b und 1c in das Wanneninnere vorspringende Ausformungen bzw. Eindrückungen 17 und 18 vorgesehen, welche durch ihre unterschiedliche Höhenanordnung auch eine unterschiedliche Höhenposition des einschiebbaren Grillrostes 13 ermöglichen.

**Patentansprüche**

1. Grillgerät mit einer wannenförmigen, in der Draufsicht quadratischen oder rechteckigen Feuerpfanne und einer Einrichtung zur verschiebbaren Abstützung eines Grillrostes sowie einem zusammenklappbaren Traggestell zur Aufnahme der Feuerpfanne, **dadurch gekennzeichnet,** daß das Traggestell aus zwei U-förmigen Gestellteilen (2;3) etwa gleicher Umrißgestalt besteht, von denen das eine sich mit den freien Schenkeln (2b und 2c) und das andere mit dem Querschenkel (3a) auf dem Untergrund abstützt, daß die Gestellteile (2;3) in Nähe ihrer nach oben weisenden Enden gelenkig miteinander verbunden sind, und die Feuerpfanne (1) zwischen den freien Schenkeln (2b und 2c sowie 3b und 3c) an diesen so gehalten ist, daß sie in die Ebene des zusammengeklappten Traggestelles verschwenkbar ist.

2. Grillgerät nach Anspruch 1, **dadurch gekenn-**

**zeichnet,** daß die Feuerpfanne (1) um eine parallel zu den Querschenkeln (2a;3a) der Gestellteile (2;3) verlaufenden Achse schwenkbar an dem einen Gestellteil (2) gehalten ist und mit ebenfalls zu den Querschenkeln (2a und 3a) der Gestellteile (2;3) fluchtend angeordneten seitlichen Führungsbolzen (8) in längs der freien Schenkel (3b und 3c) des anderen Gestellteiles (3) verlaufende Führungsschlitze (9) eingreift.

3. Grillgerät nach Anspruch 1 oder 2, **dadurch gekennzeichnet,** daß das Gestellteil (3) mit den nach oben weisenden freien Schenkeln (3b und 3c) unterhalb des Querschenkels (2a) des anderen Gestellteiles (2) endet, und mit diesem Gestellteil im Abstand von dessen Querschenkel (2a) gelenkig verbunden ist.

4. Grillgerät nach Anspruch 3, **dadurch gekennzeichnet,** daß die nach oben weisenden freien Schenkel (3b und 3c) des einen Gestellteiles (3) über ihre gelenkigen Verbindungen (4;5) mit dem anderen Gestellteil (2) hinausragen und an ihrem Ende zur Aufnahme eines Grillspießes gabelförmig ausgebildet sind.

5. Grillgerät nach Anspruch 4, **dadurch gekennzeichnet,** daß die Endabschnitte der nach oben weisenden freien Schenkel (3b und 3c) des einen Gestellteiles (3) zur Bildung je einer Kreuzungsstelle mit den Schenkeln (2b und 2c) des anderen Gestellteiles (2) aus der Ebene des U-Querschnittes abgewinkelt sind.

6. Grillgerät nach einem der Ansprüche 1 bis 5, **dadurch gekennzeichnet,** daß wenigstens eines der Gestellteile (2) aus einem Rohr geformt ist.

7. Grillgerät nach einem der vorhergehenden Ansprüche, **dadurch gekennzeichnet,** daß das Gestellteil (3) mit den nach oben weisenden freien Schenkeln (3b und 3c) aus einem im Querschnitt rechteckförmigen Flachmaterial geformt ist.

8. Grillgerät nach einem der vorhergehenden Ansprüche, **dadurch gekennzeichnet,** daß die in den nach oben weisenden Schenkeln (3b und 3c) des einen Gestellteils (3) vorgesehenen Führungsschlitze (9) wenigstens eine Rastausnehmung (12) für den Eingriff der Führungsbolzen (8) aufweisen.

9. Grillgerät nach einem der vorhergehenden Ansprüche, **dadurch gekennzeichnet,** daß der über die Anlenkstellen (4;5) mit den nach oben weisenden Schenkeln (3b und 3c) hinausragende Abschnitt des Gestellteiles (2) mit dem nach oben weisenden Mittelschenkel (2a) als abklappbarer Bügelteil ausgebildet ist, der mit seinen nach unten weisenden Schenkeln über eine arretierbare Schwenkeinrichtung mit den anderen Teilen der freien Schenkel (2b und 2c) gelenkig verbunden ist.

10. Grillgerät nach einem der vorhergehenden Ansprüche, **dadurch gekennzeichnet,** daß die den freien Schenkeln (2b und 2c sowie 3b und 3c) der Gestellteile (2;3) zugekehrten Wangen (1b;1c) der Feuerpfanne (1) Führungs- und Abstützeinrichtungen für einen längs dieser Wangen einschiebbaren Grillrost (13) aufweisen, und daß die der Einschubseite des Grillrostes gegenüberliegende Wange der Feuerpfanne (1) eine Anschlagfläche für den eingeschobenen Grillrost (13) bildet oder aufweist.

11. Grillgerät nach Anspruch 10, **dadurch gekennzeichnet,** daß die Führungseinrichtungen der Wangen (1b und 1c) der Feuerpfanne (1) für den einschiebbaren Grillrost (13) randseitig Abwinklungen (14;15) und unterhalb dieser Abwinklungen vorgesehene, in das Wangeninnere vorspringende Ausformungen (17;18) oder Eindrückungen aufweisen.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 501 882 (KÜPPERSBUSCH)<br>* Seite 5, Absatz 1 - Seite 7, Absatz 2; Abbildungen 1-5 *<br>--- | 1,3 | A47J37/07 |
| A | US-A-2 994 315 (BUSSING)<br>* das ganze Dokument *<br>--- | 1 | |
| A | GB-A-2 045 064 (UNION METAL WORKS)<br>* das ganze Dokument *<br>--- | 1 | |
| A | US-A-3 008 463 (FRANK)<br>* das ganze Dokument *<br>--- | 1,3 | |
| A | GB-A-2 001 521 (COMPANION PTY. LIMITED)<br>* das ganze Dokument *<br>----- | 1 | |

**RECHERCHIERTE SACHGEBIETE (Int. Cl.5 )**

A47J

Der vorliegende Recherchenbericht wurde für alle Patentansprüche erstellt

| Recherchenort | Abschlußdatum der Recherche | Prüfer |
|---|---|---|
| DEN HAAG | 20 NOVEMBER 1991 | HERYGERS J.J. |